# EUROPEAN PATENT APPLICATION

(11) **EP 4 095 119 A1**
(43) Date of publication of application: **30.11.2022**
(21) Application number: 22175884.0
(22) Date of filing: 27.05.2022
(51) Int. Cl.: C05F 11/00, C05F 11/08, C05F 17/00, C05F 17/40

(54) **MICROBIOLOGICALLY ENRICHED FERTILISER**

(30) Priority: 28.05.2021 IT 202100013967
(71) Applicant: GWA Gima Water&Air S.r.l., 03012 Anagni (FR) (IT)
(72) Inventor: DI COSIMO, Pierpaolo, 03100 FROSINONE (IT); DI COSIMO, Cristiano, 03100 FROSINONE (IT); SACCOCCI, Franco, 03020 Castro dei Volsci (FROSINONE) (IT); MORENO, Mauro, 80126 NAPOLI (IT)
(74) Representative: Biggi, Cristina

(57) **Abstract**

The present invention concerns a process for the preparation of a microbiologically enriched fertiliser. Said process comprises a step of contact between a fertiliser and an organic layer of soil and a step of fermentation of the fertiliser. Furthermore, the invention concerns a microbiologically enriched fertiliser obtained with the described process and the use thereof in agriculture.

## Description

### FIELD OF THE INVENTION

The present invention relates to a process for the preparation of a microbiologically enriched fertiliser. Furthermore, the invention concerns a microbiologically enriched fertiliser obtained with the described process and the use thereof in agriculture.

### PRIOR ART

The excessive and constant use of mineral fertilisers, biocidal pesticides and soil sterilization techniques has led to a strong microbiological depletion of the soils in the last century. This impoverishment, in addition to representing a considerable environmental problem, compromises the fertility of the soil and therefore puts a strain on agricultural production. Since the end of last century, this problem has led to re-evaluating the constant and widespread use of inorganic fertilisers and pesticides, and to searching for new techniques for the regeneration and microbiological enrichment of agricultural soils.

Much of the research has been focused on the use of microbiologically active organic soil conditioners or fertilisers (e.g. compost, manure etc.) or on the selection of particular species of microorganisms that can bring direct benefits to crops (e.g. bacteria and fungi belonging to the genera Bacillus, Azospirillum, Pseudomonas, Rhizobium, Beauveria, Gliocladium, Glomus, Pochonia, Metarhizium, Trichoderma, Streptomyces etc.).

The use of selected single or few microbiological species is, at best, a partial and temporary solution. To understand the limits of the use of single microbial species, some ecological and microbiological concepts should be highlighted: i) it is estimated that in a gram of "uncompromised" soil there may be several thousand different species of microorganisms (bacteria, fungi, archaea, protists and viruses), the stability of an ecosystem and the ability of the soil to effectively support the life of more complex and demanding organisms such as agricultural plants, depends on the network of interactions among all these organisms, and not on the action of single isolated organisms; ii) the selected microorganisms have difficulty in operating effectively in all different environmental conditions and some of them could be effective in certain environmental contexts but completely ineffective in others. The different ecological conditions present in the different environments make it very difficult the establishment of stable populations of the inoculated species.

The use of soil conditioners and organic fertilisers, although effective, requires a long time (some years) and large amounts of organic material for the regeneration of the microbiome of compromised soils. In this case the reasons are multiple, the starting material may not be microbiologically rich and the microbiology of the starting material although complex may not be suitable for the environmental and trophic conditions present in the place of use.

### SUMMARY OF THE INVENTION

A first aspect of the present invention concerns a process for the preparation of a microbiologically enriched fertiliser. In one embodiment, the process comprises the following steps:
a) making a fertiliser available;
b) placing the fertiliser in contact with at least one organic layer of soil;
c) covering the fertiliser with at least a second organic layer of soil;
d) keeping the fertiliser in step c) for a time comprised between 10 and 30 days;
e) mixing the fertiliser obtained in step d) with a solvent, preferably with water in order to obtain a mixture; and
f) keeping the mixture obtained in step e) at a temperature comprised between 20 and 40°C for a time comprised between 24 and 48 hours, obtaining a microbiologically enriched fertiliser.

A second aspect of the present invention refers to a microbiologically enriched fertiliser obtained with a process as described above in detail.

A third aspect of the present invention concerns the use of a microbiologically enriched fertiliser as described above in detail in agriculture, preferably as a microbiological inoculum, more preferably for sterile substrates. In one embodiment, the microbiologically enriched fertiliser as described above in detail is used as a starting material for the production of fermented compost (compost tea). Preferably, the microbiologically enriched fertiliser is employed for fertigation or as foliar spray to prevent or treat the proliferation of pathogenic organisms.

### DETAILED DESCRIPTION OF THE INVENTION

A first aspect of the present invention concerns a process for the preparation of a microbiologically enriched fertiliser. In one embodiment, the process comprises the following steps:
a) making a fertiliser available;
b) placing the fertiliser in contact with at least one organic layer of soil;
c) covering the fertiliser with at least a second organic layer of soil;
d) keeping the fertiliser in step c) for a time comprised between 10 and 30 days;
e) mixing the fertiliser obtained in step d) with a solvent, preferably with water in order to obtain a mixture; and
f) keeping the mixture obtained in step e) at a temperature comprised between 20 and 40°C for a time comprised between 24 and 48 hours, obtaining a microbiologically enriched fertiliser.

Preferably, the fertiliser is a soil conditioner, more preferably the fertiliser is a vegetable soil conditioner comprising at least 40% weight/weight (w/w) of vegetable meals or vegetable cakes, more preferably at least 60% w/w of vegetable meals or is a soil conditioner comprising at least 20% w/w of animal manure.

In one embodiment, in step b) the fertiliser is placed in contact with the at least one organic layer of soil, in a ground, at a ground depth of at least 10 centimetres, preferably at least 15 centimetres. In other words, at least 10-15 centimetres of ground are removed in order to form a space to place the fertiliser. Preferably, the ground is the ground of a forest, preferably a forest comprising *Angiospermae,* more preferably comprising different species of *Angiospermae.* In a preferred embodiment, the ground is the ground of a forest, as described above, and the fertiliser is placed in the ground near at least one plant present in the forest. Preferably, the fertiliser is placed at a distance comprised between 1 or 2 meters from at least one plant present in the ground, preferably in a forest.

In one embodiment of the invention, in step b) the fertiliser is inserted in a permeable container, preferably said container comprises meshes having a mesh size comprised between 0.5 and 2 microns. Preferably, the container is a bag, more preferably a natural textile fibre bag, preferably a jute fibre bag. Preferably, each container, preferably each bag, comprises at least 1 kg of fertiliser, more preferably at least 1.5 kg.

In one embodiment, in step c), the at least one second organic layer is a neutral litter. Preferably, the at least one second organic layer of soil is a natural litter comprising leaves, branches and other portions of at least one plant and/or other carbon sources of animal origin.

In one embodiment of the invention, in step d) the fertiliser is maintained at a temperature comprised between 10 and 20°C, preferably between 15 and 25°C. Preferably, the fertiliser, in step d), is maintained at a relative humidity greater than 40%, more preferably greater than 50%.

In one embodiment, after step d), the fertiliser is removed from the ground, i.e. it is removed from the contact with at least a first and a second organic layer of soil. In one embodiment, the fertiliser, in step e), is mixed with a solvent, preferably with water, in a fertiliser : solvent ratio comprised between 1:30 and 1:100, preferably 1:50.

In one embodiment of the invention, in step f) the mixture obtained in step e) is placed in a bioreactor containing a solvent, preferably water, for a fermentation step. Preferably, in step f) the mixture comprises an amount of dissolved oxygen comprised between 4 and 7 parts per million (ppm), preferably 5.5 ppm. At the end of step f) a microbiologically enriched fertiliser is obtained.

In one embodiment, the microbiologically enriched fertiliser obtained in step f) is mixed with a second fertiliser. Preferably, the second fertiliser is a soil conditioner, more preferably the fertiliser is a vegetable soil conditioner comprising at least 40% weight/weight (w/w) of vegetable meals or vegetable cakes, more preferably at least 60% w/w of vegetable meals or vegetable cakes, or it is a soil conditioner comprising at least 20% w/w of animal manure. Preferably, the microbiologically enriched fertiliser obtained in step f) is mixed with the second fertiliser in a microbiologically enriched fertiliser: second fertiliser ratio comprised between 1:50 and 1:150, preferably 1:100, obtaining a second mixture.

In one embodiment, the second mixture is subjected to microbiological analysis in order to exclude the presence of pathogens, such as E. coli and Salmonella.

Preferably, the second mixture is dried until an internal humidity lower than 20% is reached. Preferably, the drying takes place with the techniques known to the person skilled in the art.

Alternatively, the microbiologically enriched fertiliser obtained in step f) is placed in a solvent, preferably by infusion, in a microbiologically enriched fertiliser: solvent ratio comprised between 1:30 and 1:100. In this way a second mixture in liquid form is obtained, i.e. a microbiologically enriched liquid fertiliser is obtained.

The Applicant has in fact found that, with the method described in detail above, a microbiologically enriched fertiliser is obtained, i.e. a fertiliser that can be used as a microbiological inoculum for sterile substrates in the nursery or as a starting material for the production of fermentates (e.g. compost tea) to be used in fertigation or as a foliar spray. In fact, the microbiologically enriched liquid fertiliser can be used in fertigation, allowing to effectively counteract the symptoms of plant self-toxicity in agricultural grounds affected by soil fatigue (plant-soil negative feedback), and to improve the response of crops to biotic and abiotic adversities. In fact, the fertiliser of the present invention can be defined as a complex microbiological inoculum, i.e. comprising hundreds or thousands of different microbiological species, differentiable in compliance with the environmental conditions of application. The inoculation of a large number of species maximises the chances that stable trophic networks will be established at the site of use. The preparation of a microbiologically enriched fertiliser that is appropriate to local environmental conditions (climate, paedology, cultivated species, etc.) allows to maximize the effectiveness of the inoculum itself and to regenerate soil microbiology more effectively and stably.

The use of the same at the foliar level allows to directly contrast pathogenic organisms of the phyllosphere.

A second aspect of the present invention refers to a microbiologically enriched fertiliser obtained with a process as described above in detail.

A third aspect of the present invention concerns the use in agriculture of a microbiologically enriched fertiliser as described above in detail, preferably as a microbiological inoculum, more preferably for sterile substrates.

In one embodiment, the microbiologically enriched fertiliser is used as a mixture or in combination with a second fertiliser or soil conditioner.

In one embodiment, the microbiologically enriched fertiliser as described above in detail is used as a starting material for the production of fermented compost (compost tea). Preferably, the microbiologically enriched fertiliser is employed for fertigation or as a foliar spray to prevent or treat the proliferation of pathogenic organisms, preferably phyllosphere pathogens.

### EXAMPLE

At least 10 1-2 kg samples of fertiliser are placed inside as many permeable bags with a mesh size comprised between 2 and 0.5 mm (in natural fibre or nylon). The starting fertiliser is a mixture of organic substances (identifiable based on the current legislation as a simple non-composted vegetable soil conditioner) based on pelleted vegetable meals (40-60%), seeds (20-40%), straw (10-20%), hay (10-20%).

All bags are exposed in areas of high naturalness and biodiversity (e.g. mixed hardwood forests with a low level of anthropogenic disturbance). During exposure the samples were placed in contact with the organic layer of soil (at a maximum depth of 15 cm). In addition, the samples were covered with natural litter, comprising leaves, earth, plant branches. The exposure time is comprised between 10 and 30 days, throughout the period the samples were maintained at a humidity content of not less than 50% and at an average daily temperature of the exposure site comprised between 10 and 25 degrees Celsius (preferably between 15 and 25 °C). After an average of 20 days of exposure elapsed, the samples were taken and transported to the production plant. The samples were mixed together and inserted in 10kg permeable bags (between 1 and 0.2mm mesh thickness). The samples were inserted in a bioreactor for a fermentation step where, for every 20 kg of sample, 1,000 litres of dechlorinated water were added. The samples were maintained for 24-48 hours at a temperature comprised between 15 and 25 °C, and a dissolved oxygen level always above 5.5ppm.

At the end of fermentation, the fermented product obtained was mixed with a fertiliser in a 1:10 ratio, i.e., every 10,000 kg of fertiliser 1,000 litres of microbiologically enriched fertiliser were added.

The final fertiliser was dried at room temperature and protected from direct sunlight in order to reach a humidity ≤ 20%.

Prior to bagging, the final fertiliser was analysed to confirm the absence of Salmonella and an Escherichia coli content of less than 1000 CFU/g.

## Claims

1. A process for the preparation of a microbiologically enriched fertiliser comprising the following steps:
a) making a fertiliser available;
b) placing the fertiliser in contact with at least one organic layer of soil;
c) covering the fertiliser with at least a second organic layer of soil;
d) keeping the fertiliser in step c) for a time comprised between 10 and 30 days;
e) mixing the fertiliser obtained in step d) with a solvent, preferably with water in order to obtain a mixture; and
f) keeping the mixture obtained in step e) at a temperature comprised between 20 and 40°C for a time comprised between 24 and 48 hours, obtaining a microbiologically enriched fertiliser.

2. The process according to claim 1, wherein the fertiliser is a vegetable soil conditioner comprising at least 40% weight/weight (w/w) of vegetable meals or vegetable cakes or is a soil conditioner comprising at least 20% w/w of animal manure.

3. The process according to claim 1 or 2, wherein in step b) the fertiliser is brought into contact with the at least one organic soil layer, in a ground, at a ground depth of at least 10 centimetres, preferably at least 15 centimetres.

4. The process according to any one of claims 1-3, wherein the ground is of a forest, preferably a forest comprising *Angiospermae*, more preferably comprising several species of *Angiospermae.*

5. The process according to any one of claims 1-4, wherein in step b) the fertiliser is placed in a permeable container, preferably said container comprising meshes having a mesh size comprised between 0.5 and 2 microns.

6. The process according to any one of claims 1-5, wherein the at least one second organic soil layer comprises leaves, branches and other portions of at least one plant and/or other carbon sources of animal origin.

7. The process according to any one of claims 1-6, wherein in step d) the fertiliser is maintained at a temperature comprised between 10 and 20°C, preferably between 15 and 25°C, and at a relative humidity greater than 50%.

8. The process according to any one of claims 1-7, wherein in step e) the fertiliser is mixed with the solvent in a fertiliser : solvent ratio comprised between 1:30 and 1:100, preferably 1:50.

9. The process according to any one of claims 1-8, wherein the microbiologically enriched fertiliser obtained in step f) is mixed with a second fertiliser in a microbiologically enriched fertiliser : second fertiliser ratio comprised between 1:50 and 1:150, preferably 1:100, obtaining a second mixture.

10. The process according to claim 9, wherein the second mixture is dried until an internal humidity lower than 20% is reached.

11. The process according to any one of claims 1-8, wherein the microbiologically enriched fertiliser obtained in step f) is placed in a solvent, preferably by infusion, in a microbiologically enriched fertiliser : solvent ratio comprised between 1:30 and 1:100.

12. A microbiologically enriched fertiliser obtained by a process according to any one of claims 1-11.

13. A use in agriculture of a microbiologically enriched fertiliser according to claim 12, possibly in a mixture with a second fertiliser, as a microbiological inoculum, preferably for sterile substrates, or as a starting material for the production of fermented compost (*compost tea*) or to prevent or to treat the proliferation of pathogenic organisms, preferably phyllosphere pathogenic organisms.
